Europäisches Patentamt

**European Patent Office**

Office européen des brevets

(19)

(11) Publication number: **0 029 272**
**A2**

(12) # EUROPEAN PATENT APPLICATION

(21) Application number: **80201074.4**

(22) Date of filing: **13.07.79**

(51) Int. Cl.³: **C 25 D 3/50**

(30) Priority: **14.07.78 US 924618**
**14.07.78 US 924632**

(43) Date of publication of application: **27.05.81**
**Bulletin 81/21**

(84) Designated Contracting States: **BE DE FR GB IT NL**

(60) Publication number of the earlier application in
accordance with Art. 76 EPC: **0007239**

(71) Applicant: **INCO EUROPE LIMITED, Thames House**
**Millbank, London SWIP 40F (GB)**

(72) Inventor: **Scarpellino, Anthony Joseph, Pine Hill Road**
**Maple Brook, Tuxedo, N.Y. 10997 (US)**

(74) Representative: **Hedley, Nicholas James Matthew et al,**
**Thames House (fifth floor) Millbank, London SWIP 4QF**
**(GB)**

(54) **An iridium compound and a bath and a process for electrodepositing iridium.**

(57) The invention provides an iridium compound that is
prepared by refluxing a diammonium hexahalo iridium salt
with sulphamic acid for a length of time sufficient to permit, after distillation and cooling of the refluxing product,
the formation of a precipitate. This generally takes at least
30 hours e.g. 70 hours. In the case of the diammonium
hexachloride salt, the precipitate is olive green in colour.

EP 0 029 272 A2

An iridium compound and a bath and a
process for electrodepositing iridium

The present invention relates to an iridium compound which may be used in an electrodeposition bath for
electrodepositing iridium and particularly in a bath for
co-depositing ruthenium and iridium.

Iridium is the most inert of all the platinum group
metals and does not dissolve in mineral acids or even in
aqua regia.   It is highly conductive, has a high melting
point and is both dense and hard.   It can be used as a
coating on a substrate made of a cheaper, more readily
available material for decorative or practical purposes.
An iridium coating can be applied from one of several known
baths described in, for example, U.S. Patent Specifications
1,077,920; 3,554,881; 3,639,219 and in Chemical Abstracts,
vol. 72, page 17792 in (1970).   In general in preparing
such baths, iridium is used as a chloride or as a
diamminohexachloro iridium (IV) salt.   U.S. Patent
Specification No. 3,639,219 describes the use as an iridium
bath of a solution obtained by refluxing iridium chloride
and sulphamic acid at $100^{\circ}C$ for from 15 to 60 hours,
typically 30 hours.

According to the present invention, there is
provided an iridium compound characterised in that it is
produced by reacting a diammonium hexahalo iridium salt
by refluxing it with sulphamic acid in an aqueous environment for a period of time sufficient to permit, after
distillation and cooling of the refluxing product, the
formation of a precipitate.

When the diammino hexahalo iridium salt is
$(NH_4)_2 Ir Cl_6$, refluxing has to be carried out for more
than 30 hours, and usually for more than 50 hours, e.g.
70 hours, following which an olive green precipitate
is formed after distillation and cooling.

The precipitate is preferably thoroughly washed,
for example until it is uniformly green in colour.   The
iridium product is water-soluble to some extent and in order to minimise dissolution, the washing is preferably carried out at below room temperature, for example between O and $5^{O}C$.

The structure of the iridium product is not known but it is has a melting point above $350^{O}C$ and differential thermogravimetric analysis (DTG) in air shows that the product has a weight loss of about 46% from room temperature to $600^{O}C$. In contrast, DTG analysis on $(NH_4)_2 Ir Cl_6$ shows about a 61% weight loss under the same conditions. It appears from the I.R. Spectrograph of the green salt that water is present but not an Ir-Ni-Ir bridge.

The washed iridium compound may be dissolved in water to form a bath from which iridium can be electrodeposited and is especially useful in a bath that also contains a soluble ruthenium compound for co-depositing ruthenium and iridium, in which case the bath preferably also contains a soluble fluoroborate salt and fluoroboric acid as is discussed in European Patent Specification No. 7239A.

While the bath may contain relatively large amounts of the iridium compound (and also of the ruthenium salt), it is preferred to keep the precious metal content of the bath at a low level to minimise the metal loss due to drag-out and to minimise precious metal inventories. Preferably the iridium concentration in the bath is less than 12 g/l, for example 3 to 10 g/l. Ruthenium, when present in the bath, is preferably at a concentration within the ranges given above for iridium.

As is explained in European Patent Specification No. 7239A, the ratio of ruthenium to iridium in a bath for producing a co-deposit of the two metals can be varied widely without affecting the proportions of each of the two metals in the deposit by adding controlled amounts of a soluble fluoroborate salt and fluoroboric acid to the bath. This permits the bath to be used for a particular alloy composition even though the bath composition changes as the electrodeposition proceeds. In general, however the

- 3 -

0029272

initial bath can usefully contain ruthenium and iridium in approximately a 1:1 weight ratio. The electrolyte can be replenished as necessary by adding a solution with ruthenium and iridium in concentrations equivalent to the composition of the deposit. Such a bath can be operated to produce an iridium-ruthenium deposit containing from 0.1 to 36% iridium.

Sulphamic acid is preferably present in the bath as a stress reliever of the deposit.

The electrodeposition process can be carried out at a temperature in the range of about room temperature up to about $95^{o}C$, preferably about 50 to $70^{o}C$ and at a cathode current density of about 5 to 120 $mA/cm^2$, preferably about 20 to 100 $mA/cm^2$.

The pH of the bath is important. If it is not maintained within certain tolerable limits, iridium will not deposit. The optimum pH range is about 0.3 to about 1.5, preferably about 0.9 to about 1.3. The pH is maintained, advantageously, with fluoboric acid or sulphamic acid.

The following Examples illustrate the invention:

### EXAMPLE 1

A.     25 g of $(NH_4)_2IrCl_6$ and 60 g of $NH_2SO_3H$ were dissolved in 600 $cm^3$ of distilled water. The solution was refluxed continuously for 71 hours. Then 550 $cm^3$ of the refluxed solution was distilled off. The distillate was a clear, colourless solution which gave a positive test for $Cl^-$ ion when $AgNO_3$ was added. The remainder of the solution was dark murky green, which upon cooling produced a thick precipitate, which was collected on filter paper and washed several times with ice water. After air drying, it was transferred to a desiccator to dry and resulted in approximately 11 g of an olive green salt. The filtrate and rinse water will yield more of this green salt, but only after considerable standing or by reduction of the volume by another distillation. The iridium contents of two different preparations were 44.4% and 45.1%. X-ray diffraction analysis of these salts gave a similar pattern, which was different to that of $(NH_4)_2 Ir Cl_6$, the starting material. It appears from the infrared spectrograph of the green salt that $H_2O$ is present, but no Ir-N-Ir bridge. Chemical analysis shows it to contain 44.4% Ir, 41.1% Cl, 5.3% N, 5.1% O, 4.12% $NH_4$, 0.71% $H_2O$, and the presence of H. No S is present. Its melting point is above $350^{O}C$.

B. The above procedure was repeated except that the solution of diammonium hexahalo iridium (IV) in sulphamic acid was refluxed for only 30 hours. X-ray diffraction analysis on a black precipitate obtained after distillation and filtration showed it to be the diammino iridium salt, i.e. the diammonium iridium salt did not react in this time period.

## EXAMPLE 2

Plating baths were prepared using the iridium compound prepared by the route described in Example 1 and using $Ru_2 N (H_2O)_2 Cl_8 (NH_4)_3$ and with the ruthenium and iridium in a weight ratio of 1 to 1, to give ruthenium-iridium deposits containing various amounts of iridium. Typical baths and plating conditions are shown in Table I.

## TABLE I

|  |  |  | Bath | | | |
|---|---|---|---|---|---|---|
|  |  |  | I | II | III | IV |
| A | COMPOSITION, g/1 | | | | | |
|  | Ru | | 8-9 | 8-9 | 3-4 | 3.4 |
|  | Ir | | 8-9 | 8-9 | 3-4 | 3-4 |
|  | $NaBF_4$ | | 100 | 100 | 75 | 75 |
|  | $HBF_4$ | | 30 | 20 | 14 | 4 |
|  | $NH_2SO_3H$ | | 7 | 7 | 6-7 | 5-7 |
| B | PLATING CONDITIONS | | | | | |
|  | current density $(mA/cm^2)$ | | 30 | 30 | 20 | 20 |
|  | T $(^{\circ}C)$ | | 70 | 70 | 60 | 60 |
|  | pH | | 0.9 | 0.8 | 0.9 | 1.2 |
| C | Ir IN DEPOSIT | | | | | |
|  | w/o | | 3-4 | 5-6 | 8-9 | 23-24 |

Further examples of the use of baths containing the iridium compound of the present invention are quoted in European Patent Specification No. 7239A.

## Claims

1. An iridium compound characterised in that it is produced by reacting a diammino hexahalo iridium salt by refluxing it with sulphamic acid in an aqueous environment for a period of time sufficient to permit, after distillation and cooling of the refluxed product, the formation of a precipitate.

2. An iridium compound as claimed in claim 1, characterised in that its preparation includes refluxing for at least 30 hours.

3. An iridium compound as claimed in claim 2, characterised in that its preparation includes refluxing for at least 50 hours.

4. An iridium compound as claimed in claim 3, characterised in that its preparation includes refluxing for about 70 hours.

5. An iridium compound as claimed in any one of claims 1 to 4, characterised in that the diammino hexahalo iridium salt is a chloride and the precipitate is olive green.

6. An iridium compound as claimed in any one of claims 1 to 5, characterised in that the precipitate is washed with water at a temperature of from 0 to 5°C.

7. A bath for electrodepositing iridium on a conductive substrate which comprises an aqueous solution containing the iridium compound as claimed in any one of claims 1 to 6.

8. An aqueous bath as claimed in claim 7, wherein the aqueous solution also contains a soluble ruthenium compound.

9. A process of electrodepositing iridium from a bath as claimed in claim 7 or 8.